# DEMANDE DE BREVET EUROPEEN

(11) **EP 0 705 883 A1**
(43) Date de publication de la demande: **10.04.1996**
(21) Numéro de dépôt: 95402016.0
(22) Date de dépôt: 06.09.1995
(51) Int. Cl.: C08L 71/02, C08L 77/00, C08L 79/00, C08L 67/02, B42D 15/10

(54) **Carte antistatique**

(30) Priorité: 23.09.1994 FR 9411450
(71) Demandeur: ELF ATOCHEM S.A., F-92800 Puteaux, Hauts de Seine (FR)
(72) Inventeur: Leroux, Roland, F-92370 Chaville (FR); Beal, Jean-Luc, F-78960 Voisins-Le-Bretonneux (FR)

(57) **Abrégé**

L'invention concerne des cartes du type carte de crédit ou carte de téléphone à base d'un mélange :
**a****)** d'au moins un élastomère thermoplastique comprenant des blocs polyéthers hydrophiles,
**b****)** d'au moins une résine thermoplastique choisie parmi les résines styréniques, les résines de chlorure de vinyle, les polycarbonates, les polyesters et les polyamides.

## Description

La présente invention concerne des cartes antistatiques telles que, par exemple, des cartes de crédit ou des cartes de téléphone, ces cartes peuvent porter des pistes magnétiques et/ou une puce électronique.

La plupart des cartes actuellement sur le marché sont en polyester ou en polychlorure de vinyle (PVC).

Il est très souhaitable que ces cartes soient antistatiques.

En effet, au cours de leur fabrication et de leur utilisation, il est généré de l'électricité statique, par exemple, au cours de l'impression, ou lors du dépôt des pistes magnétiques ou encore par frottement dans les lecteurs. Ceci provoque une accumulation de poussières sur la carte gênant sa fabrication, son impression ou son fonctionnement. Les additifs habituels ne forment pas un mélange stable avec le matériau de la carte, il peut y avoir exsudation et une perte des effets antistatiques.

On a maintenant trouvé qu'on pouvait faire des cartes à l'aide de mélanges antistatiques.

La présente invention concerne des cartes à base d'un mélange :

**a****)** d'au moins un élastomère thermoplastique comprenant des blocs polyéthers hydrophiles,
**b****)** d'au moins une résine thermoplastique choisie parmi les résines styréniques, les résines de chlorure de vinyle, les polycarbonates, les polyesters et les polyamides.

Au sens de la présente invention, on désigne par "cartes" les cartes de crédit, les cartes de téléphone, les badges, les cartes d'accès aux parking, les billets de métro à usages multiples et, en général, tout ce qui a une épaisseur de 0,1 à 3 mm qui peut mesurer, par exemple, de 1 cm de large par 2 cm de long à 5 cm de large par 20 cm de long.

L'élastomère (**a**) peut comprendre différents blocs polyéthers, au moins une partie de ces blocs doivent être hydrophiles. On préfère le polyéthylène glycol (PEG) comme groupe hydrophile.

L'élastomère thermoplastique (**a**) peut comprendre des motifs polyéthers et des motifs polyesters. Ce sont, par exemple, des blocs polyéthers et des blocs polyesters.

Ces produits sont connus sous le nom de polyesters élastomères et sont thermoplastiques.

Les polyéthers sont, par exemple, du polyéthylène glycol, du polypropylène glycol (PPG) ou du polytétraméthylène glycol (PTMG). Du PEG devant être présent.

La masse molaire Mn de ces polyéthers peut être comprise entre 250 et 6000.

Ces polyéthers se condensent avec au moins un diacide carboxylique pour former les segments souples des polyesters élastomères.

Les blocs polyesters résultent, par exemple, de la condensation d'au moins un diol avec au moins un diacide carboxylique. Le diol peut être le glycol, le propanediol ou le butanediol. Le diacide peut être l'acide téréphtalique. Ces blocs forment les segments durs du polyester élastomère.

Les segments durs peuvent comprendre plusieurs motifs résultant de l'action d'un diol sur un diacide.

Les segments souples peuvent comprendre plusieurs motifs résultant de l'action du polyéther sur un diacide. Les segments durs et les segments souples sont attachés par des liaisons ester. De tels polyesters élastomères sont décrits dans les brevets EP 402 883 et EP 405 227.

Les élastomères thermoplastiques (**a**) à motifs polyéthers peuvent aussi être des copolyétherimides ester. Les segments souples sont formés par la réaction de polyéther diamines avec des composés tricarboxyliques ou anhyrides d'acide carboxylique contenant un groupe carboxylique tel que par exemple l'anhyride trimellitic. Les polyéthers diamines utilisés ont une masse molaire moyenne de 600 à 12000. Ces polyétherdiamines peuvent eux-mêmes être issus de polyéthylèneglycol, polypropylèneglycol ou polytetraméthylèneglycol, pourvu que des polyétherdiamines dérivées du PEG soient présents.

Les blocs polyesters formant les segments dans des copolyétherimides ester résultent, par exemple, de la condensation d'au moins un diol avec au moins un diacide carboxylique. Le diol peut être le glycol, le propanediol ou le butanediol. Le diacide peut être l'acide terephtalique. De tels copolyétherimides ester sont décrits dans EP 402 883 et EP 405 227.

Quant aux élastomères thermoplastiques (**a**) qui comprennent des motifs polyéthers et des motifs amides, ils peuvent être répartis de façon statistique ou ordonnée. Les motifs amides peuvent être isolés ou groupés dans des oligomères provenant de la réaction d'une diamine avec un diacide ou de la condensation d'un alpha oméga amino acide carboxylique.

Les élastomères les plus utilisés sont ceux comprenant des blocs polyamides et des blocs polyéthers. Les blocs polyamides peuvent provenir soit de la condensation d'un lactame ou d'un alpha oméga amino acide, soit de la réaction d'un diacide et d'une diamine.

Ces blocs polyamides peuvent être préparés en présence d'un diacide. On obtient des blocs polyamides à extrémités acide carboxylique. La masse molaire Mn des blocs polyamides peut être entre 600 et 5000.

Les polyéthers sont, par exemple, du polyéthylène glycol, du polypropylène glycol ou du polytétraméthylène glycol de masse molaire Mn entre 250 et 6000, plusieurs polyéthers peuvent être enchaînés, par exemple, par des diacides dans le cas des polyétherdiols pourvu que du PEG soit présent.

On ne sortirait pas du cadre de l'invention en utilisant d'autres élastomères à blocs polyamides et à blocs polyéthers. Ces produits peuvent être préparés par réaction de lactame ou alpha oméga amino acide de diacide et de polyétherdiol ou polyétherdiamine. On peut aussi condenser des blocs polyamides à extrémités aminées avec des polyéthers diacides, condenser des blocs polyamides à extrémités acides avec des polyétherdiamines.

Tous ces produits sont décrits dans les brevets US 4,331,786 - 4,115,475 - 4,195,015 - 4,839,441 et 4,864,014.

Les résines styréniques (**b**) peuvent être choisies parmi :
- le polystyrène ou ses mélanges avec du polybutadiène, du NBR (caoutchouc / nitrile / butadiène) ou des copolymères blocs tels que SBS (styrène / butadiène / styrène) ou SEBS (styrène / éthylène-butylène / styrène), SIS (styrène / isoprène / sytrène).
- les copolymères SAN (styrène / acrylonitrile).
- les copolymères ABS (acrylonitrile / butadiène / styrène).
- les copolymères MABS (méthacrylate de méthyle / acrylonitrile / butadiène / styrène).
- les copolymères MBS (méthacrylate de métyle / butadiène / styrène).

Les ABS, MBS et MABS peuvent aussi être mélangés avec du NBR, SBS, SIS ou SEBS.

La résine thermoplastique (**b**) peut être aussi un polymère à base de chlorure de vinyle tel que le PVC. Le PVC peut être plastifié.

La résine thermoplastique (**b**) peut être aussi un polycarbonate. Le polycarbonate peut être aromatique ou aliphatique ou aliphatique-aromatique. En général, c'est un homo ou copolymère d'un bisphenol tel qu'un 2,2 - bis (4-hydroxyphenyl) alcane, bis (4-hydroxyphenyl) éther ou bis (4-hydroxyphenyl) sulfone, sulfure ou sulfoxyde.

La résine (**b**) peut être aussi choisie parmi les polyesters tels que, par exemple, le PET (polyéthylène terephtalate) ou le PBT (polybutylène terephtalate).

La résine (**b**) peut être aussi un polyamide.

Par résine polyamide on désigne présentement une résine produite par polycondensation d'un ou plusieurs aminoacides tels que les acides aminocraproique amino-7 heptanoique, amino-11 undécanoïque ou de quantités équimolaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amine par rapport aux groupes terminaux carboxyle dans le polyamide.

A titre d'illustration de telles résines on citera :
- le polyhexaméthylèneadipamide (polyamide 6-6),
- le polyhexaméthylèneazélaamide (polyamide 6-9),
- le polyhexaméthylènesébacamide (polyamide 6-10),
- le polyhexaméthylènedodécanédiamide (nylon 6-12),
- le poly-undécanoamide (polyamide 11).

Il est possible aussi d'utiliser dans la présente invention des polyamides préparés par polycondensation d'au moins deux des monomères mentionnés ci-dessus, ce qui conduit à des copolyamides.

Les résines polyamides de la présente invention peuvent également être produites par polymérisation d'un ou plusieurs lactames tels que le caprolactame qui conduit au polyamide 6 ou le lauryllactame qui conduit au polyamide 12.

Par résine polyamide on désigne aussi au sens de la présente invention des alliages de polyamides et de polyoléfines majoritaires en polyamides. Les polyoléfines peuvent être des homo ou copolymères de l'éthylène ou du polypropylène. Ces alliages peuvent comprendre un agent compatibilisant.

Le mélange de (**a**) et de (**b**) peut aussi comprendre des additifs usuels anti UV, antioxydants... .

Le mélange est préparé par les méthodes habituelles de la technologie des thermoplastiques.

Les cartes de l'invention peuvent être fabriquées par pressage, calandrage, moulage... Elles peuvent être formées de plusieurs feuilles collées ou pressées les unes sur les autres entre lesquelles on a inséré des pistes magnétiques ou des puces ou des circuits électroniques. Dans ce dernier cas, les feuilles ont été évidées partiellement de telle sorte qu'une cavité a été faite pour disposer la puce ou le circuit électronique. En général, la carte est produite directement en une feuille à base d'un mélange de (**a**) et (**b**). Cette feuille peut être évidée partiellement sur une partie de sa surface pour y recevoir une puce ou un circuit électronique.

On peut aussi déposer sur la surface de la carte des pistes magnétiques.

La quantité de (**a**) est déterminée par le degré d'antistaticité recherché et par la quantité de polyéthers hydrophiles contenus dans (**a**).

Les élastomères (**a**) disponibles industriellement contiennent de 10 à 20 % en poids de blocs polyéthers hydrophiles. La demanderesse a trouvé qu'en utilisant au plus 15 parties de (**a**) pour 100 parties de (**a**) + (**b**), on obtenait un effet antistatique - on utilise le plus souvent de 4 à 12 parties de (**a**) pour 100 parties de (**a**) + (**b**).

Les mélanges des polymères (**a**) et (**b**) sont très stables, il n'y a pas migration de (**a**). On obtient un effet antistatique durable. A la différence de l'addition de noir de carbone pour obtenir un effet antistatique, les élastomères (**a**) ne sont pas colorés.

En particulier, les polyéthers bloc amides sont parfaitement incolores.

L'élastomère (a), à la différence de certains antistatiques, n'est par corrosif pour les puces ou circuits électroniques.

Les cartes de l'invention ont un aspect mat et soyeux.

Les cartes de l'invention peuvent être imprimées ou décorées par toute méthode habituelle. On constate une netteté exceptionnelle des caractères et des images. On ne sortirait pas du cadre de l'invention en recouvrant ces cartes, avant ou après avoir déposé les pistes magnétiques, avec un ou plusieurs films en résine thermoplastique.

### Exemple :

On a préparé un mélange d'ABS (92 parties) et de polyéthers bloc amides (8 parties).

L'élastomère **a** est un polymère ayant des blocs PA6 de Mn 1500 et des blocs PEG de Mn 1000 et de dureté shore D = 40.

On a ensuite préparé des feuilles de la dimension d'une carte de crédit et d'épaisseur 1,2 mm et avec un évidement de 8 mm de diamètre et de profondeur 0,4mm. On a ensuite sur la face sans évidement déposé des pistes magnétiques puis imprimé ces cartes. La puce a été fixée ensuite.

Il n'y a eu aucun défaut d'impression, de fonctionnement de la puce. Alors qu'une carte identique mais fabriquée avec la résine (**b**) seule, il y a eu des défauts d'impression parce que la chaîne d'impression s'est bloquée à cause de l'électricité statique ou que la quantité de poussières était élevée et a gêné l'impression, des puces détruites par l'électricité statique.

De plus, les cartes satisfaisantes au point de vue magnétique et électronique ne présentent pas une qualité d'impression ni un aspect aussi soigné que les cartes à base de (**a**) et (**b**).

## Revendications

1. **Cartes**
à base d'un mélange :
**a**) d'au moins un élastomère thermoplastique comprenant des blocs polyéthers hydrophiles,
**b**) d'au moins une résine thermoplastique choisie parmi les résines styréniques, les résines de chlorure de vinyle, les polycarbonates, les polyesters et les polyamides.

2. Cartes selon la revendication 1 caractérisées en ce que **b** est une résine ABS.

3. Cartes selon l'une des revendications 1 ou 2 caractérisées en ce que **a** est un polymère ayant des blocs polyamides et des blocs PEG.

4. Cartes selon l'une des revendications 1 à 3 caractérisées en ce que ce sont des cartes de crédit, de téléphone, d'accès aux parkings, des billets de métro à usages multiples ou des badges.
